# EUROPÄISCHE PATENTSCHRIFT

(11) **EP 0 617 846 B1**
(45) Veröffentlichungstag und Bekanntmachung des Hinweises auf die Patenterteilung: **10.07.1996**
(21) Anmeldenummer: 93901037.7
(22) Anmeldetag: 17.12.1992
(51) Int. Cl.: H01M 10/50, G01R 31/36

(54) **ANORDNUNG ZUR VERBESSERUNG DER STROMABGABE EINER AUFLADBAREN BATTERIE BEI TIEFEN AUSSENTEMPERATUREN**
DEVICE FOR IMPROVING THE CURRENT OUTPUT OF A CHARGEABLE BATTERY AT LOW OUTSIDE TEMPERATURES
DISPOSITIF POUR ACCROITRE LA QUANTITE DE COURANT DELIVREE PAR UNE BATTERIE RECHARGEABLE LORSQUE LA TEMPERATURE EXTERIEURE EST BASSE

(30) Priorität: 21.12.1991 DE 4142628
(43) Veröffentlichungstag der Anmeldung: 05.10.1994
(73) Patentinhaber: BRAUN, Dieter, D-12165 Berlin (DE)
(72) Erfinder: BRAUN, Dieter, D-12165 Berlin (DE)
(74) Vertreter: Stoffregen, Hans-Herbert, Dr. Dipl.-Phys.
(86) Internationale Anmeldenummer: EP9202930
(87) Internationale Veröffentlichungsnummer: WO9313568

(56) Entgegenhaltungen:
- DE-A- 2 643 903
- DE-A- 3 427 028
- DE-A- 3 433 309
- DE-A- 4 017 475
- DE-A- 4 027 149
- FR-A- 2 546 339

## Beschreibung

Die Erfindung bezieht sich auf eine Anordnung zur Verbesserung der Stromabgabe einer aufladbaren Batterie bei tiefen Außentemperaturen für einen Verbraucher, wobei ein Temperaturfühler, der flüssigkeitsdicht und säurefest im Inneren der Batterie angeordnet ist, einen Stromfluß durch wenigstens ein Heizelement freigibt, wenn die Batterietemperatur unterhalb eines vorgegebenen Temperatursollwertes liegt und die Batteriespannung größer als ein unterer Schwellenwert und kleiner als ein oberer Schwellenwert ist.

Eine Anordnung der vorstehend beschriebenen Art ist bekannt (DE 90 12 327 U). Als Heizelement enthält diese Anordung einen Leistungstransistor der flüssigkeitsdicht und säurefest im Batterieinneren auf einem Kühlkörper befestigt ist und beim Heizen von der Batterie mit Strom versorgt wird. Mit dieser Batterieheizvorrichtung soll die Temperatur der aufladbaren Batterie auch bei tiefen Außentemperaturen auf einem günstigen Wert gehalten werden, um den Batterieinnenwiderstand für die hohe Stromentnahme beim Starten der Batterie klein zu halten. Die Heizleistung der Batterie wird dieser selbst entnommen. Bei längeren Standzeiten und tiefen Außentemperaturen entlädt sich die Batterie im Laufe der Zeit. Um eine zu starke Entladung zu verhindern, wird die Heizung abgeschaltet, wenn die Batteriespannung einen unteren Grenzwert, z. B. 12 Volt, erreicht hat. Dieser Schwellenwert ist ein Maß für die Restladung der Batterie.

Hat die Batterie ihre Restladung erreicht und hält die tiefe Außentemperatur noch an, dann kühlt sich die Batterie ab und nimmt nach einer gewissen Zeit die Temperatur der Umgebung an. Die Batterie hat dann wiederum schlechte Kaltstarteigenschaften.

Aus der DE 33 40 882 C1 geht eine Vorrichtung zur temperaturgeregelten Batterieheizung mittels eines Kaltleiters hervor, der in gutem thermischen Kontakt mit der Zelle steht und zu dieser elektrisch parallel geschaltet ist. Erhöht bzw. erniedrigt sich die Temperatur der Zelle, so wirkt der Kaltleiter durch Verminderung bzw. Erhöhung seiner Heizleistung entgegen. Die Heizleistung des Kaltleiters wird durch seine entsprechende Dimensionierung unter Berücksichtigung der thermischen Kontaktfläche abgestimmt.

Hier setzt die Erfindung ein, der das Problem zugrundeliegt, eine Anordnung zu entwikkeln, die auch dann einer Batterie günstige Starteigenschaften verleiht, wenn die Batterie ohne Aufladung relativ lange tiefen Außentemperaturen ausgesetzt war.

Das Problem wird bei einer Anordnung der eingangs beschriebenen Art erfindungsgemäß dadurch gelöst, daß eine Triggerschaltung vorgesehen ist, die auf den Anstieg der Batteriespannung nach dem Abschalten des Stroms in einem Verbraucher mit einem hohen Stromverbrauch anspricht und eine Zeitschaltung betätigt, die bei unterhalb des unteren Schwellenwerts liegender oder diesem gleicher Batteriespannung den Leistungstransistor für eine eingestellte Zeitdauer leitend steuert.

Bei einer auf den unteren Schwellenwert abgesunkenen Batteriespannung ist die Batterie noch ausreichend geladen, um für eine gewisse Zeit den Heizstrom aufzubringen und danach den Strom für das Starten des Motors abzugeben. Die vorstehend beschriebene Anordnung erkennt den Spannungszustand der Batterie und das beim Einschalten der Zündung bzw. eines starken Verbrauchers (Zigarettenanzünder) verursachte Absinken der dynamischen Spannung. Das Abschalten des Verbrauchers aktiviert über die Rückflanke der Spannungsänderung die Heizung über einen definierten Zeitraum und versetzt die Batterie wieder in den optimalen Betriebszustand. Beim Startvorgang selbst wird die Heizung ausgeschaltet. Nach erfolglosem Motorstart wird die Batterie während des verbleibenden Zeitintervalls weiter beheizt. Dieser Vorgang ist beliebig oft wiederholbar.

Falls die Batterien bei tiefen Außentemperaturen zur Verbesserung der Betriebseigenschaften aufgeheizt werden sollen, ist es zweckmäßig in der jeweiligen Batterie eine Heizfolie flüssigkeitsdicht und säurefest anzuordnen, die sich beim Stromdurchgang aufheizt. Als Heizelement kann insbesondere auch ein auf einem Kühlkörper befestigter, flüssigkeitsdicht und säurefest im Inneren der Batterie angeordneter Leistungstransistor vorgesehen sein, dessen Steuerelektrode von einer Temperaturregelschaltung ansteuerbar ist.

Besonders günstig ist es, wenn das Heizelement oszillierend ein- und ausgeschaltet wird, wobei die Schwingungen des Stroms hinsichtlich Häufigkeit und Dauer an die Größe und den Typ der jeweiligen Batterie angepaßt werden. Unter Heizelement ist, wie oben bereits erwähnt, auch die Batterie selbst zu verstehen, wenn sie geladen wird. Durch den Wechsel zwischen Stromentnahme und stromlosen Zuständen und den damit verbundenen Temperaturschwankungen läßt sich das leistungsmindernde Sulfatieren der Platten der Batterie besser vermeiden als durch gleichbleibende Beheizung. Die Stromentnahmezyklen, die Rückladespannung und damit der Rückladestrom werden ebenfalls zur Verbesserung der Betriebseigenschaften bei der Entnahme eines hohen Batteriestroms und bei tiefen Außentemperaturen auf den jeweiligen Batterietyp und die Batteriegröße abgestimmt. Damit kann bei manchen Batteriearten eine unerwünscht starke Gasung vermieden werden. Der oszillierende Stromfluß über die Batterie kann auch bei höheren Temperaturen eingesetzt werden, um die Eigenschaften zu verbessern. Es ist dann nicht notwendig, die Batterie zu beheizen. Die osziellierende Stromentnahme zur Verbesserung der Batterieeigenschaften stellt daher eine eigenständige Erfindung dar, die sich nicht nur bei sehr tiefen Außentemperaturen günstig auswirkt.

Vorzugsweise beträgt die Zeitdauer etwa 15 Minuten. Diese Zeit reicht aus, um auch bei Außentemperaturen von ca. -20 °C die Batterie auf einen für das Starten günstigen Temperaturwert aufzuheizen. Es ist zweckmäßig, daß die Zeitschaltung während der Zeitdauer ein Anzeigeelement betätigt. Am Anzeigeelement läßt sich erkennen, ob die Batterie aufgeheizt wird. Es kann das Ende der Aufheizzeit abgewartet werden, bevor der Anlasser des Motors erneut eingeschaltet wird. Hierdurch kann eine unnötige Belastung der Batterie vermieden werden.

Bei einer bevorzugten Ausführungsform ist vorgesehen, daß der Leistungstransistor mit seiner Steuerelektrode über zwei in Reihe geschaltete Widerstände mit der Temperaturregelschaltung und über zwei weitere in Reihe geschaltete Widerstände mit einem der Zeitschaltung nachgeschalteten Differenzverstärker verbunden ist, daß Einrichtungen zur Überwachung des unteren und oberen Schwellenwerts über Dioden an die gemeinsame Verbindungsstelle der beiden von der Temperaturregelschaltung gespeisten Widerstände gelegt sind und daß die Temperaturregelschaltung über eine Diode an die gemeinsame Verbindungsstelle der vom Differenzverstärker gespeisten Widerstände gelegt ist.

Die Temperaturregelschaltung wird bei dieser Anordnung von den Einrichtungen zur Überwachung der Schwellenwerte in ihrem Einfluß auf den Leistungstransistor gesperrt, wenn die Schwellenwerte über- oder unterschritten werden. Die Zeitschaltung steuert den Leistungstransistor auch dann leitend, wenn die Batteriespannung den unteren Schwellenwert unterschritten hat. Bei einer weiteren günstigen Ausführungsform ist eine Triggerschaltung vorgesehen, die auf den Abfall der Batteriespannung beim Einschalten des Stroms für einen Verbraucher mit hohem Stromverbrauch anspricht und die Zeitschaltung zurücksetzt. Durch diese Anordnung wird beispielsweise beim Startvorgang selbst die Heizung abgeschaltet. Damit steht die Energie der Batterie für einen Startvorgang voll zur Verfügung.

Es ist zweckmäßig, wenn ein Meßwiderstand in Reihe mit dem Leistungstransistor angeordnet und Bestandteil eines Schwellwertdiskriminators ist, dessen Ausgang über Dioden je an die gemeinsamen Verbindungsstellen der in Reihe geschalteten Widerstände angeschlossen ist. Durch diese Anordnung wird ein Überstromschutz erreicht.

Bei einer weiteren bevorzugten Ausführungsform ist vorgesehen, daß erste Leitungen, die zu dem Heizelement oder dem Temperaturfühler verlaufen, an den oberen Rändern der Wand Anschlüsse aus Blei aufweisen, daß im Deckel der Batterie die Bauteile der Temperaturregelschaltung, der Einrichtungen zur Überwachung der Schwellenwerte, der Triggerschaltungen und der Zeitschaltung flüssigkeitsdicht und säurefest angeordnet sind und daß die zu dem Temperaturfühler und dem Heizelement verlaufenden zweiten Leitungen mindestens an den Enden mit Anschlüssen aus Blei versehen sind, die mit den Anschlüssen der ersten Leitungen verschweißt sind. Diese Vorrichtung gewährleistet einen flüssigkeitsdichten und säurefesten Verschluß der Batterie und einen flüssigkeitsdichten und säurefesten Einschluß der Leitungen.

Als Speichermedien für die Ladespannungen eignen sich besonders Kondensatoren großer Kapazität oder auch Batterien z. B. Nickel-Cadmium oder Lithium-Batterien.

Eine Verbesserung der Betriebseigenschaften einer Batterie bei tiefen Temperaturen, insbesondere bezüglich der Abgabe hoher Ströme, läßt sich auch durch thermische Isolierung der Batterie gegenüber der Umgebung erreichen. Die Batterien kühlen daher nicht so schnell ab, d. h. die günstigen Eigenschaften zur Abgabe hoher Ströme bleiben längere Zeit nach der Aufladephase noch erhalten. Wenn bei diesen thermisch isolierten Batterien eine Erwärmung oder Rückladung durchgeführt wird, ist die Wärmeabgabe an die Umgebung wesentlich geringer als bei den herkömmlichen Batterien, d.h. es wird schneller eine höhere Temperatur erreicht. Hierdurch läßt sich mit einer geringeren Energiemenge eine höhere Temperatur in der Batterie erzielen.

Besonders zweckmäßig ist es, wenn ein Behälter für mehrere Batterien Wände aufweist, von denen wenigstens eine erste Wandsegmente im Abstand voneinander enthält, die hohl sind und unter Überdruck stehen und sich über die volle Wandstärke erstrecken, wobei jeweils ein an einer Wandaußenseite beginnender Teil der Zwischenräume zwischen den Wandsegmenten von unter Überdruck stehenden weiteren hohlen zweiten Wandsegmenten ausgefüllt ist, die mit den ersten Wandsegmenten verbunden sind, und wobei ein anderer Teil der Zwischenräume zwischen den ersten Wandsegmenten, von einer die ersten Wandsegmente an ihren wandinnenseitigen Enden überbrückenden Wand abgeschlossen ist und unter Unterdruck steht. Die Wand kann kuppelförmig oder tonnenförmig ausgebildet sein und als Dach die Gruppe von Batterien umgeben. Dabei sind die Querschnitte der Wandsegmente bausteinartig an die Wand- oder Dachform angepaßt und z.B. rechteckförmig oder trapezförmig ausgebildet.

Es ist auch möglich, die Wand nach Art eines Tonnengewölbes auszubilden. Die Wandsegmente, die unter Überdruck stehen, sind fest miteinander verbunden, so daß eine sich selbst tragende Konstruktion gebildet wird, die für größere Batterieeinheiten geeignet sind, wie sie z.B. bei Solargeneratoren eingesetzt werden können.

Bei dieser Vorrichtung, die einen eigenständigen erfinderischen Gehalt hat, wird die Folie bei Unterdruck ein Stück in die Aussparungen zwischen den Wandsegmenten gesaugt und liegt dort fest an. Bei einem niedrigen Druck in den Aussparungen wird bereits eine gute thermische Isoliereigenschaft erreicht. Zusätzlich zu dem durch die thermische Isolierung der Batterie erreichten großen Wärmeübergangswiderstand können lichtdurchlässige Materialien für die Wände, Folie und die Batteriegehäuse verwendet werden. Hierdurch bewirkt von außen in die Zellen der Batterien eindringendes Licht eine gewisse Erwärmung. Die Innenräume der Wandsegmente sind z.B. durch Öffnungen miteinander verbunden, so daß in allen Wandsegmenten gleichzeitig der Überdruck durch Einblasen von Luft erzeugt werden kann. In diesem Fall können die Wandsegmente flexible Wände enthalten.

Bei einer anderen günstigen Vorrichtung, die ebenfalls einen eigenständigen erfinderischen Gehalt hat, weist ein Behälter für mehrere Batterien Wände auf, von denen wenigstens eine zwei gleich ausgebildete, jeweils innen und außen angeordnete Hälften enthält, die jeweils im Abstand voneinander angeordnete, hohle, unter Überdurck stehende erste Wandsegmente enthält, wobei jeweils die von einer Wandaußenseite beginnenden Zwischenräume zwischen den ersten Wandsegmenten teilweise von hohlen, unter Überdruck stehenden zweiten Wandsegmenten ausgefüllt sind, die mit den ersten Wandsegmenten verbunden sind, und wobei an die den Wandaußenseiten abgewandten Seiten der ersten Wandsegmente Folien unter dem in den wandsegmentfreien Zwischenräumen herrschenden Unterdruck angedrückt sind und die ersten Wandsegmente der beiden Hälften um die Hälfte des Abstands der Wandsegmente versetzt zueinander angeordnet und gegen die Folie der jeweils anderen Hälfte angedrückt sind.

Bei dieser Vorrichtung, die ebenfalls für größere Batterieeinheiten geeignet ist, ergibt sich eine sehr gute thermische Isolierung bei hoher Festigkeit der Wand. Die Wandsegmente jeweils einer Hälfte können ebenfalls durch Öffnungen miteinander verbunden sein, um gleichzeitig in allen Wandsegmenten Überdruck erzeugen zu können. Die thermische Isolierung kann umso besser sein, je größer der Unterdruck in den Zwischenräumen zwischen den ersten Wandsegmenten ist. Bei derartigen Vakuum/Überdruckkammerkonstruktionen wird ein Gehäuse mit einer gewissen Stabilität erzeugt. Hierdurch kann weitgehend bei der Dachkonstruktion auf schwere und wärmeleitende Stützelemente für das Tragwerk verzichtet werden. Die Vorrichtung eignet sich für große Energiespeicher, wie sie bei Solar- und Windkraftwerken verwendet werden.

Eine weitere, zweckmäßige Vorrichtung besteht darin, daß wenigstens eine Batterie in einem Gehäuse angeordnet ist, die eine Wand mit zwei Platten aufweist, die auf den Innenseiten Wülste enthalten, die auf beiden Platten versetzt zueinander angeordnet sind und über die unelastische Seile mit geringer Wärmeleitfähigkeit gespannt sind, wobei die Wülste unter einem im Hohlraum zwischen den Platten herrschenden Unterdruck oder Vakuum gegen die Seile angedrückt sind. Die Schnüre oder Seile oder auch eine Folie gewährleisten, daß bei Unterdruck im Hohlraum zwischen den Platten der Plattenabstand erhalten bleibt. Die Wülste oder Noppen liegen an den Schnüren, Seilen oder Folien an, die eine geringe Wärmeleitfähigkeit haben. Durch die geringe Wärmeleitfähigkeit der Seile, Schnüre oder Folien und durch den Unterdruck im Hohlraum wird eine besonders gute thermische Isolierung der jeweiligen Batterie erreicht. Die oben beschriebene Vorrichtung kann auch ohne Aufheizvorrichtung oder Rückladeeinrichtung bei Batterien eingesetzt werden und hat einen eigenständigen erfinderischen Charakter.

Bei einer anderen vorteilhaften Vorrichtung ist vorgesehen, daß in jeder Zelle der Batterie ein U-förmiges Rohr angeordnet ist, dessen Bogen am oder nahe am Boden der Zelle liegt und Durchlaßöffnungen aufweist, während die Öffnungen der Schenkel des Rohres nahe am oberen Ende der Zelle liegen, wobei Mittel zur Erzeugung einer Strömung im oder am Rohr vorgesehen sind. Die Mittel zur Erzeugung der Strömung können bei Fahrzeugbatterien Metallkugeln, z. B. aus Blei sein, die mit Teflon ummantelt sind. Statt Kugeln kann auch ein im Rohr beweglich gelagerter Schlitten, z. B. aus Blei, vorgesehen sein. Bei der Beschleunigung des Rohrs bewegen sich die Kugeln oder der Schlitten im Rohr, so daß eine Strömung im Rohr entsteht, die eine Durchmischung der Flüssigkeit in der Zelle bewirkt. Es können sich deshalb keine Flüssigkeitszonen mit unterschiedlichen Säurekonzentrationen in der Zelle bilden. Durch einen Elektrolyt mit gleichmäßiger Säurekonzentration wird die Arbeitsweise der Batterie verbessert.

Bei stationär eingesetzten Batterien sind zweckmäßigerweise innerhalb der Rohre säurefest gekapselte Eisenkugeln und außerhalb des Rohrs nebeneinander Spulen flüssigkeitsdicht angeordnet, die abwechselnd nacheinander periodisch an eine Betriebsspannungsquelle anschließbar sind. Durch den Stromfluß bilden sich magnetische Felder aus, die eine Bewegung der Eisenkugeln in einer von der Richtung der Fortschaltung der Spulen abhängigen Richtung hervorrufen. Die Spulen können im gleichen Zyklus angesteuert werden wie die Leistungstransistoren für die Batterieheizung. Die Öffnungen des Rohrs können mit einem Ventil versehen werden. Es ist auch möglich, die Spulen außerhalb der Zellen anzuordnen, so daß keine flüssigkeitsdichte Ausbildung notwendig ist.

Die oben beschriebene Vorrichtung eignet sich auch ohne Heizvorrichtung und/oder thermisch isolierten Wänden für Batterien, um eine gleichmäßige Eigenschaft des Elektrolyten in der gesamten Batterie zu gewährleisten. Daher hat diese Vorrichtung ebenfalls einen eigenständigen erfinderischen Gehalt.

Weitere Einzelheiten, Vorteile und Merkmale der Erfindung ergeben sich nicht nur aus den Ansprüchen und den diesen zu entnehmenden Merkmalen - für sich und/oder in Kombination -, sondern auch aus der folgenden Beschreibung eines in einer Zeichnung dargestellten bevorzugten Ausführungsbeispiels.

Es zeigen:
- Fig. 1: ein Schaltbild einer Batterieheizvorrichtung,
- Fig. 2: ein Batteriegehäuse mit Deckel und mit eingesetztem Heizelement im Längsschnitt,
- Fig. 3: eine Anordnung zur Erzeugung eines oszillierenden Stroms in einem Heizelement im Blockschaltbild,
- Fig. 4: eine Anordnung zur Erzeugung eines Rückladestroms in einer Batterie im Blockschaltbild,
- Fig. 5: eine andere Anordnung zur Erzeugung eines Rückladestroms in einer Batterie im Blockschaltbild,
- Fig. 6a: eine Wand für Batterien im Längsschnitt,
- Fig. 6b: eine andere Ausführungsform einer Wand für Batterien im Längsschnitt,
- Fig. 7: eine andere Ausführungsform einer Wand für Batterien im Längsschnitt,
- Fig. 8: die in Fig. 7 dargestellte Wand im Schnitt längs der Linien I-I,
- Fig. 9: eine weitere Ausführungsform einer Wand für Batterien im Schnitt und
- Fig. 10: eine Batteriezelle im Querschnitt.

Eine Batterieheizvorrichtung enthält als Heizelement einen bipolaren Leistungstransistor (10), der im folgenden auch als Transistor (10) bezeichnet wird. Der Transistor, z. B. pnp-Typ, ist mit seinem Emitter über eine Leitung (12) an den positiven Pol (14) einer aufladbaren Batterie (16) angeschlossen. Der Transistor (10) ist auf einem Kühlkörper (18) z. B. auf einem Blech, befestigt. Der Kollektor des Transistors (10) ist über eine Leitung (19) in Reihe mit einem Meßwiderstand (20) an den negativen Pol (22) der Batterie (16) angeschlossen. Die Basis des Transistors steht über zwei in Reihe geschaltete Widerstände (24), (26) mit dem Ausgang eines ersten Differenzverstärkers (28) in Verbindung, der seine Betriebsspannung von der Batterie (16) erhält. Über zwei weitere, in Reihe geschaltete Widerstände (30) und (32) ist die Basis des Transistors (10) an den Ausgang einer Temperaturregelschaltung (34) angeschlossen. Der Ausgang der Temperaturregelschaltung (34) ist weiterhin über eine Diode (36) an die gemeinsame Verbindungsstelle der beiden Widerstände (24) und (26) angeschlossen. Die Diode (36) liegt mit der Anode am Ausgang der Temperaturregelschaltung.

Eine Einrichtung (38) zur Überwachung der Batteriespannung auf einen unteren Schwellenwert, z. B. von 12 Volt, weist eine Diode (40) auf, die mit der Kathode an die gemeinsame Verbindungsstelle der beiden Widerstände (30), (32) angeschlossen ist. Eine andere Einrichtung (42) zur Überwachung der Batteriespannung auf einen oberen Schwellenwert, z. B. 13,75 Volt, weist eine Diode (44) auf, die an die gemeinsame Verbindungsstelle der Widerstände (30), (32) angeschlossen ist.

Eine in Reihe mit einem Widerstand (46) an die Pole (14) und (22) angeschlossene Zener-Diode (48) stellt eine stabilisierte Spannung für den invertierenden Eingang eines Differenzverstärkers (50) in der Einrichtung (42) und den nichtinvertierenden Eingang eines Differenzverstärkers (52) in der Einrichtung (38) zur Verfügung. Der Differenzverstärker (50) speist die Diode (44) und enthält einen Rückkopplungswiderstand (54) zum nichtinvertierenden Eingang hin, der weiterhin eine Spannung zwischen zwei in Reihe angeordneten Widerständen (56), (58) abgreift. Die Widerstände (56), (58) sind in Reihe mit zwei weiteren Widerständen (60) und (62) an die Pole (14), (22) angeschlossen. Von der gemeinsamen Verbindungsstelle der Widerstände (60) und (62) wird eine Spannung für den invertierenden Eingang des Differenzverstärkers (52) abgegriffen, dessen Ausgang über einen Widerstand (64) auf den nichtinvertierenden Eingang rückgekoppelt ist. Parallel zur Zener-Diode (48) sind fünf Widerstände (66), (68), (70), (72) und (74) in Reihe geschaltet.

Die Widerstände (66) bis (74) bilden eine Hälfte einer Brückenschaltung, deren andere Hälfte aus der Reihenschaltung eines Thermistors (76) z. B. eines NTC-Widerstands und eines Widerstands (78) besteht. Von der gemeinsamen Verbindungsstelle des Thermistors (76) und des Widerstands (78) verläuft eine Leitung zum nichtinvertierenden Eingang eines Differenzverstärkers (80) der Temperaturregelschaltung (34).

Der invertierende Eingang des Differenzverstärkers (80) ist über einen Widerstand (82) an die gemeinsame Verbindungsstelle der Widerstände (72), (74) angeschlossen. Der Differenzverstärker (80), der einen Rückkopplungswiderstand (84) enthält, speist den Widerstand (32) und die Diode (36).

Ein aus zwei Widerständen (86), (88) bestehender Spannungsteiler ist an die Pole (14), (22) angeschlossen. Parallel zum Widerstand (86) ist ein Kondensator (90) gelegt. Der Abgriff des Spannungsteilers aus den Widerständen (86), (88) ist einerseits an den nichtinvertierenden Eingang eines Differenzverstärkers (92) und andererseits an den invertierenden Eingang eines Differenzverstärkers (94) angeschlossen. Der invertierenden Eingang des Differenzverstärkers (92) ist an die gemeinsame Verbindungsstelle der Widerstände (60), (62) angeschlossen. Der nichtinvertierende Eingang des Differenzverstärkers (94) ist an die gemeinsame Verbindungsstelle der Widerstände (58), (60) angeschlossen. Der nichtinvertierende Eingang des Differenzverstärkers (28) ist mit dem nichtinvertierenden Eingang des Differenzverstärkers (92) verbunden.

Der Ausgang des Differenzverstärkers (92) ist über eine Diode (96) mit dem nichtinvertierenden Eingang eines Differenzverstärkers (98) in einer Zeitschaltung (100) verbunden. Die Kathode der Diode (96) ist an den nichtinvertierenden Eingang gelegt.

Der Differenzverstärker (94) gehört zu einer Triggerschaltung, die auf die ansteigende Spannungsflanke nach einem Spannungseinbruch der Batteriespannung anspricht.

Ausgangsseitig ist ein Differenzverstärker (94) über einen Widerstand oder zwei an die Kathode einer Diode (104) angeschlossen, deren Anode mit dem nichtinvertierenden Eingang des Differenzverstärkers (98), einem Kondensator (106) und einem Widerstand (108) verbunden ist. Der Kondensator (106) ist weiterhin mit dem Pol (22) verbunden. Der Widerstand (108) ist an den Abgriff zwischen den Widerständen (68), (70) gelegt.

Der invertierenden Eingang des Differenzverstärkers (98) ist an den Abgriff zwischen den Widerständen (70), (72) angeschlossen. Der Ausgang des Differenzverstärkers (98) ist über einen Widerstand (110) mit dem invertierenden Eingang des Differenzverstärkers (28) und mit der Anode einer Diode (112) verbunden, deren Kathode an den Ausgang des Differenzverstärkers (52) angeschlossen ist.

Eine aus einem Widerstand (114) und einem Kondensator (116) bestehende Reihenschaltung verbindet den Ausgang des Differenzverstärkers (98) mit den nichtinvertierenden Eingang. Zwei Dioden (118), (120) sind gegenpolig in Reihe zwischen dem nichtinvertierenden Eingang und dem Ausgang des Differenzverstärkers (98) angeordnet. Die miteinander verbundenen Kathoden der Dioden (118), (120) sind an die gemeinsame Verbindungsstelle des Kondensators (116) und des Widerstands (114) angeschlossen.

Ein weiterer Differenzverstärker (122) ist im Rahmen einer Schwellenwertdiskriminatorschaltung mit seinem nichtinvertierenden Eingang an den Meßwiderstand (20) angeschlossen. Der Ausgang des Differenzverstärkers (122) ist über einen Rückkopplungswiderstand (124) mit dem invertierenden Eingang verbunden, der weiterhin über einen Widerstand (126) an die gemeinsame Verbindungsstelle der Widerstände (66), (68) gelegt. Mit dem Ausgang des Differenzverstärkers (122) sind zwei Dioden (128), (130) verbunden, von denen die eine an die gemeinsame Verbindungsstelle der Widerstände (24), (26) und die anderen an die gemeinsame Verbindungsstelle der Widerstände (30), (32) angeschlossen ist.

Der Transistor (10) auf dem Kühlkörper (18) und der Temperaturfühler sind in einer Folie (132) flüssigkeitsdicht und säurefest in der Batterie (16) unterhalb von Platten (134) angeordnet. Die Leitungen (12), (19) und die nicht näher bezeichneten Leitungen zur Basis des Transistors (10) und zum Temperaturfühler verlaufen in Nuten oder Bohrungen in mindestens einer Wand (136) der Batterie (16) und sind in der Wand durch Verschweißen flüssigkeitsdicht eingeschlossen.

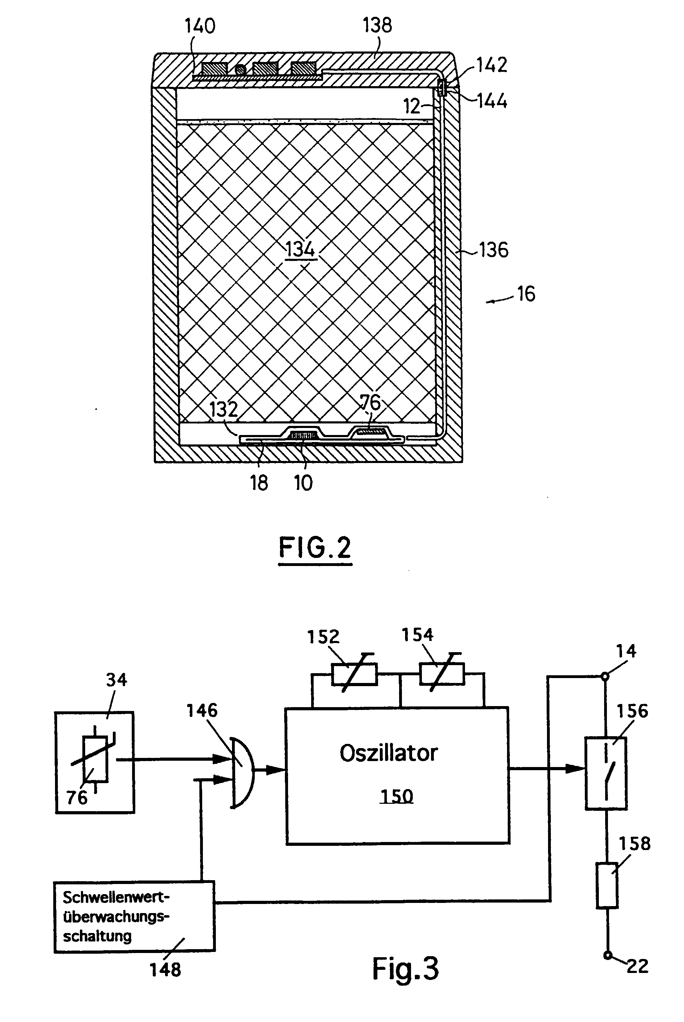

Die Fig. 2 zeigt im Längsschnitt die Batterie (16). Die Leitungen (12), (19) und die übrigen zur Folie (132) verlegten Leitungen sind isoliert.

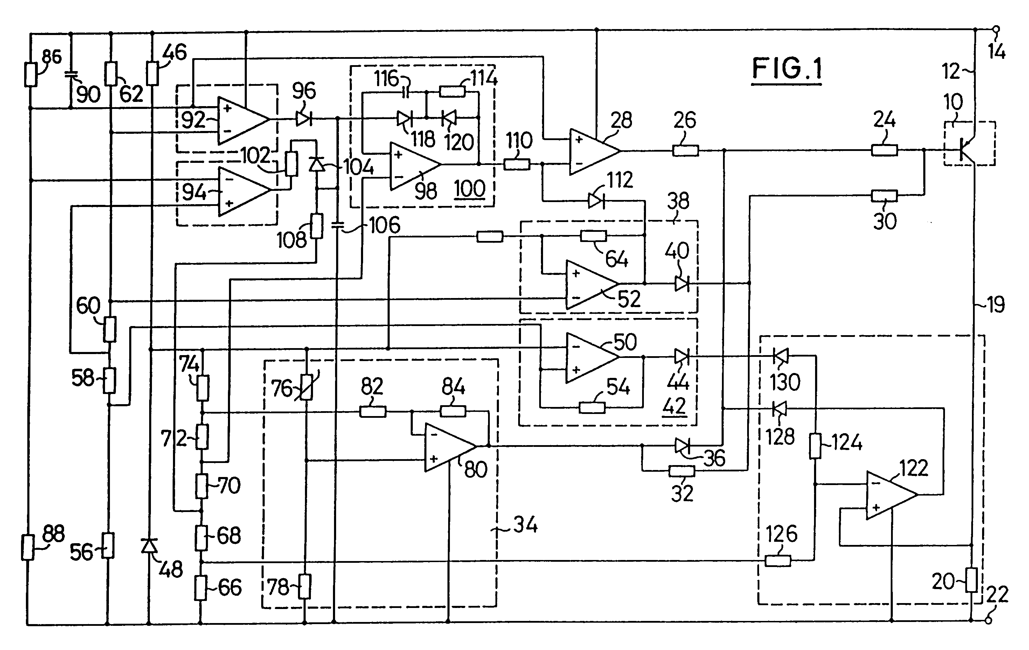

Im Deckel (138) der Batterie (16) sind außer dem Transistor (10) und dem Thermistor (76) die übrigen in Fig. 1 dargestellten Bauelemente der Schaltung auf einer Leiterplatte (140) angeordnet und flüssigkeitsdicht eingeschlossen.

Zwischen Deckel (138) und den Wänden verlaufen nicht näher bezeichnete erste Leitungen von den Polen (14), (22) zu der Leiterplatte (14) sowie zweite Leitungen, die von der Leiterplatte (140) ausgehen. An der Unterseite des Deckels (138) sind an der Auflagestelle auf der Wand (136) Anschlüsse (142) aus Blei vorgesehen. Den Anschlüssen (142) stehen jeweils Anschlüsse (144) der Enden der zweiten Leitungen gegenüber.

Bei der Verschweißung des Deckels (138) mit dem Batteriekasten werden gleichzeitig je zwei Anschlüsse (142) und (144) innerhalb des Kunststoffs miteinander verschweißt. Auf diese Weise wird ein flüssigkeitsdichter und säurefester Anschluß der Leitungen und Anschlüsse erreicht.

Wenn der Thermistor (76) eine zu niedrige, z. B. unter 15 °C liegende Temperatur mißt, wird der Differenzverstärker (80) an seinen Eingängen mit einer Spannungsdifferenz beaufschlagt und gibt an seinem Ausgang ein niedriges Potential, z. B. das Potential des Pols (22) ab. Hierdurch erhält der Transistor (10) über die beiden Widerstände (30), (32) Basisstrom und wird leitend. Im Transistor (10) fließt ein Strom, der Wärme erzeugt, die an die Batterie (16) abgegeben wird.

Wenn die Temperatur der Batterie über 15 °C liegt, gibt der Differenzverstärker (80) ein hohes Potential, z. B. das Potential des Pols (14), aus, das über die Diode (36) und den Widerstand (24) bzw. die Widerstände (30), (32) den Transistor (10) sperrt.

Wenn die Batteriespannung über dem unteren Schwellenwert liegt, steht am Ausgang des Differenzverstärkers (52) ein niedriges Potential an, das dem Potential des Pols (22) entspricht, so daß die Diode (40) in Sperrichtung arbeitet. Der Transistor (10) kann dann von der Temperaturregelschaltung (34) mit Basisstrom versorgt werden, wenn die Batterietemperatur den eingestellten Sollwert unterschreitet.

Der Differenzverstärker (50) gibt an seinem Ausgang ein niedriges Potential ab, wenn die Batteriespannung kleiner als der obere Schwellenwert ist. Hierdurch wird die Diode (44) in Sperrichtung betrieben, so daß die Temperaturregelschaltung (34) bei entsprechend niedriger Batterietemperatur den Transistor (10) mit Basisstrom versorgen kann. Die Differenzverstärker (52) und (50) beaufschlagen die Dioden (40), (44) bei unter oder über den jeweiligen Schwellenwerten liegenden Batteriespannungen jeweils mit hohen Potentialen in Durchlaßrichtung, die über den Widerstand (30) auf die Basis des Transistors (10) gelangen und diesen unabhängig vom Ausgangssignal des Differenzverstärkers (80) sperren.

Ist der Spannungsabfall am Meßwiderstand (20) kleiner als die am Widerstand (66) abgegriffene Spannung, gibt der Differenzverstärker (122) einen niedriges Potential, z. B. das Potential des Pols (22), aus, so daß die Dioden (128), (130) in Sperrichtung arbeiten. Übersteigt die Spannung am Meßwiderstand (20) die Spannung am Widerstand (66), dann geht der aus dem Widerstand (20), den Widerständen (66) und (126) und dem Differenzverstärker (122) bestehende Diskriminator in einen anderen stabilen Zustand über, in dem der Ausgang ein hohes Potential, z. B. das Potential des Pols (14) führt und den Transistor (10) nichtleitend steuert.

Wenn die Batteriespannung gleichbleibende Werte hat, gibt der Ausgang des Differenzverstärkers (98) ein niedriges Potential, z. B. das Potential des Pols (22), ab, das kleiner als das am nichtinvertierenden Eingang des Differenzverstärkers (28) liegende Potential ist. Der Differenzverstärker (28) erzeugt deshalb ein Ausgangssignal mit hohem Potential, z. B. das Potential des Pols (14), das den Transistor (10) nichtleitend steuert. Am nichtinvertierenden Eingang des Differenzverstärkers (98) steht ein Potential an, das niedriger als das Potential am invertierenden Eingang ist. Der Differenzverstärker (94) gibt an seinem Ausgang ein hohes Potential ab.

Am Ausgang des Differenzverstärkers (92) herrscht bei gleichbleibender Batteriespannung aufgrund des Teilerverhältnisses der mit den Eingängen verbundenen Spannungsteiler ein niedriges Potential, nämlich das dem Pol (22) entsprechende Potential. Wird bei einer Batteriespannung, die den unteren Schwellenwert erreicht oder unterschritten hat, ein starker Verbraucher, z. B. der Anlasser des Motors, eingeschaltet, sinkt die Batteriespannung ab und steigt wieder an, wenn der Strom im Verbraucher z. B. durch dessen Abschaltung unterbrochen ist. Mit der Flanke der ansteigenden Spannung wird der Schaltzustand des als Komparator geschalteten Differenzverstärkers (92) aufgrund des Spannungssprungs am Kondensator (90) umgekehrt.

Der Differenzverstärker (92) führt kurzzeitig -d.h. in Abhängigkeit von der Zeitkonstante des den Kondensator (90) und den Widerstand (86) enthaltenden Kreises- hohes Ausgangspotential, das dem Potential des Pols (14) entspricht. Hierdurch wird das Zeitglied (100) angestoßen, in dem der Differenzverstärker (98) über das von der Diode (96) eingespeiste hohe Potential zur Änderung seines Schaltzustands veranlaßt wird.

Über das sich einstellende hohe Ausgangspotential des Differenzverstärkers (98) wird der Schaltzustand des als Komparator geschalteten Differenzverstärkers (28) geändert, so daß an den Widerstand (26) ein niedriges Potential angelegt wird. Hierdurch kann ein Basisstrom im Transistor (10) fließen, durch den der Transistor (10) leitend gesteuert wird. Der Differenzverstärker (92) geht nach dem Abklingen des Spannungssprungs am Kondensator (90) in einen ursprünglichen Schaltzustand über. In diesem Schaltzustand kann sich der Kondensator (116) entladen. Nach dessen Entladung ändert der Differenzverstärker (98) wiederum seinen Schaltzustand, mit dem über den Differenzverstärker (28) der Transistor (10) nichtleitend gesteuert wird.

Die Entladezeitkonstante ist auf die Heizdauer abgestimmt und sorgt insbesondere für eine Heizdauer von etwa 15 Minuten.

Die Diode (112) verhindert, daß die Heizung mit vorgegebener Zeitdauer dann eingeschaltet wird, wenn die Batteriespannung über dem unteren Schwellenwert liegt, da dann die Temperaturregelschaltung den Transistor (10) nach den Erfordernissen des Temperatursollwerts einschaltet, der durch die Widerstände der Brückenschaltung festgelegt ist.

Der Differenzverstärker (92) bildet mit den Spannungsteilern an seinem Eingang einen Komparator, der Triggerschaltung die Zeitschaltung in Abhängigkeit von der Rückflanke eines Spannungseinbruchs der Batteriespannung anstößt.

An den Differenzverstärker (98) kann ein Meldeelement, z. B. eine Leuchtdiode, angeschlossen sein, um den Betrieb der Heizung anzuzeigen, so daß eine weitere Einschaltung des Anlassers bis zum Ende der an der Leuchtdiode erkennbaren Heizdauer unterbleiben kann.

Wenn während der Heizdauer ein Verbraucher trotzdem eingeschaltet wird, der hohen Strom zieht, spricht der Differenzverstärker (94) auf die abfallende Flanke der Batteriespannung an und ändert seinen Schaltzustand, bei dem der Ausgang ein niedriges Potential, z. B. das des Pols (22) hat. Hierdurch wird die Diode (104) leitend gesteuert. Der nichtinvertierende Eingang des Differenzverstärkers (98) wird dabei an ein niedriges Potential gelegt, so daß der Differenzverstärker (98) seinen Schaltzustand ändert.

Dies bedeutet, daß der Transistor (10) nichtleitend gesteuert wird.

Der Differenzverstärker (94) und die mit seinen Eingängen verbundenen Widerstände der Spannungsteiler bilden eine Triggerschaltung, die die Heizung abschaltet, wenn ein starker Stromverbraucher, z. B. der Anlasser, eingeschaltet wird.

Die erfindungsgemäße Heizvorrichtung kann insbesondere auch für Traktionsbatterien genutzt werden. Dabei kann die Heizung solange arbeiten, bis ein optimaler Arbeitszustand der Batterie erreicht worden ist.

Bei einer 6 Zellen aufweisenden Batterie sind vorzugsweise 2 Heizelemente vorgesehen, die in der 2. und in der 5. Zelle angeordnet werden. Hierdurch ergibt sich eine optimale Temperaturverteilung innerhalb der Batterie.

Die Lagefixierung der Leitungen erfolgt im Bereich zwischen den Trennwänden der einzelnen Zellen und des mit diesen insbesondere durch Spiegelschweißen (Erweichen der später aufeinanderliegenden Bereiche von Deckel und Trennwänden) verbundenen Deckels. Hierzu können Einschnitte wie Einkerbungen in den oberen Rändern der Trennwände vorgesehen sein, um die Leitungen vorzupositionieren. Auch sei erwähnt, daß selbstverständlich mehr als ein Transistor pro Heizelement vorgesehen sein kann, um dem Wärmebedarf entsprechend aufheizen zu können.

In Fig. 3 ist im Blockschaltbild eine Anordnung zum Aufheizen eines flüssigkeitsdicht und säurefest in einer Batterie angeordneten Heizelementes dargestellt. Diese Anordnung enthält ebenso wie die in Fig. 1 gezeigte Heizvorrichtung einen Thermistor (76), der in einer Brückenschaltung angeordnet ist. Die Brückenschaltung ist an eine Temperaturregelschaltung (34) angeschlossen, deren Ausgang an eine Torschaltung (146) gelegt ist. Eine Schwellwertüberwachungsschaltung (148) ist mit dem einen Pol (14) der Batterie (16) verbunden und gibt ein Signal ab, wenn die Batteriespannung größer als ein unterer Schwellenwert und kleiner als ein oberer Schwellenwert ist. Der Ausgang der Schwellwertüberwachungsschaltung (148) ist an einen zweiten Eingang der Torschaltung (146) gelegt, bei der es sich um ein UND-Glied handeln kann.

Der Ausgang der Torschaltung (146) ist an einen Oszillator (150) angeschlossen, der insbesondere eine Rechteckimpulsfolge erzeugt, deren Frequenz sowie Impulspausen- und Impulsdauerverhältnis einstellbar ist. Für die Einstellung sind z.B. Trimmerpotentiometer (152), (154) vorgesehen. Der Ausgang des Oszillators (150) ist mit einem Schalter (156) verbunden, bei dem es sich um einen kontaktlosen Schalter oder um ein Relais handeln kann. Als kontaktloser Schalter wird z. B. ein Transistor verwendet, dessen Steuerelektrode mit dem Ausgang des Oszillators (150) verbunden ist.

Der Schalter (156) ist in Reihe mit einem Heizelement, einer Heizfolie (158), zwischen den Polen (14), (22) der Batterie (16) angeordnet. Die Heizfolie (158) ist säurefest und flüssigkeitsdicht in der Batterie (16) angeordnet. Mit der Anordnung gemäß Fig. 3 wird die Batterie in Abhängigkeit von der vom Thermistor (76) festgestellten Temperatur so durch die Heizfolie (158) beheizt, daß sich für den jeweils entsprechenden Batterietyp (Start-, Traktions-, Solarbatterien u. a.) und die jeweilige Batteriegröße ein optimales synchrones (Kohärentes) Oszilieren von Stromentnahme und Heizleistung ergibt. Diese Art der Aufheizung der Batterie verhindert insbesondere das leistungsmindernde Sulfatieren der Platten in den Zellen der Batterie.

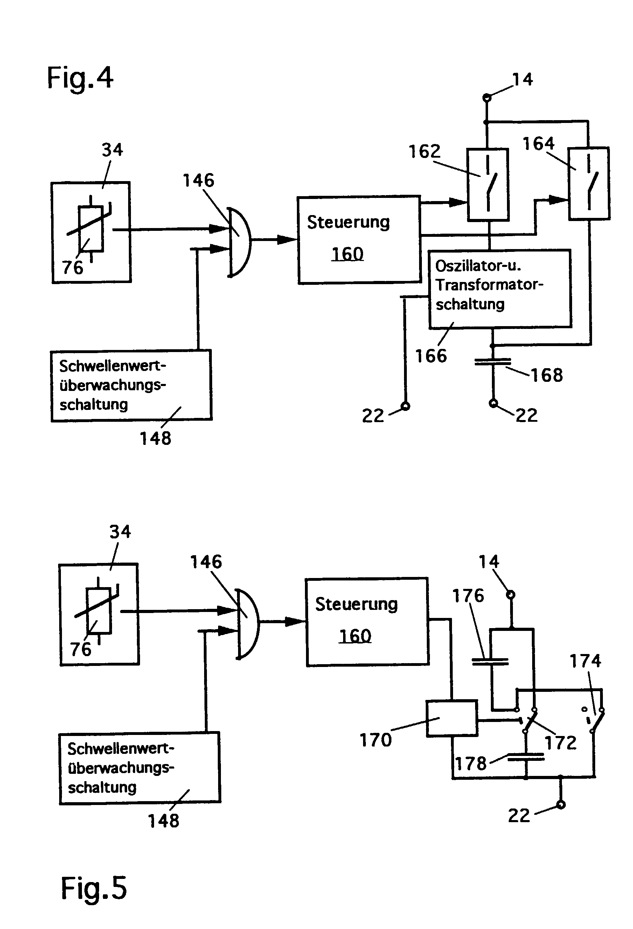

Eine Anordnung, die neben der Erzeugung einer gewissen Heizleistung in der Batterie noch zusätzliche, die Kaltstarteigenschaften verbessernde Wirkungen hat, ist in Fig. 4 dargestellt. Die Anordnung gemäß Fig. 4 enthält ebenso wie die in Fig. 1 und Fig. 3 dargestellten Anordnungen einen als Thermistor ausgebildeten Temperaturfühler, der in einer Brückenschaltung angeordnet ist, die der in Fig. 1 gezeigten entspricht. Die Brückenschaltung ist mit einer Temperaturregelschaltung (34) verbunden, die in Fig. 1 im einzelnen dargestellt und in Fig. 4 mit (34) bezeichnet ist.

Die Anordnung gemäß Fig. 4 enthält ebenso wie die Anordnung gemäß Fig. 3 eine Schwellwertüberwachungsschaltung (148), die ebenso wie die Temperaturregelschaltung (34) mit einer Torschaltung (146) verbunden ist, deren Ausgang an eine Steuerung (160) angeschlossen ist, die in Abhängigkeit von der Batterietemperatur und dem Ausgangssignal der Schwellwertüberwachungsschaltung (148) zwei Schalter (162), (164) steuert, bei denen es sich um kontaktlose Schalter oder Relais handeln kann. Die Steuerung (160) stellt ebenso wie der Oszillator (150) gemäß Fig. 3 fest, ob ein Verbraucher an die Batterie angeschlossen ist.

Die Prüfung kann auf die oben in Verbindung mit der Anordnung gemäß Fig. 1 beschriebene Art erfolgen. Die Schalter werden, wenn eine entsprechende Außentemperatur vorhanden ist und die Batteriespannung innerhalb der in der Schwellwertüberwachungsschaltung eingestellten Grenzen liegt, wechselweise ein- und ausgeschaltet. Der Schalter (162) ist in Reihe mit einer Oszillator- und Transformatorschaltung (166) zwischen den Polen (14) und (22) der Batterie (16) angeordnet. Ein Ausgang der Oszillator- und Transformatorschaltung (166) ist mit einem Energiespeicher (166) verbunden. Der Schalter (164) ist zwischen dem Pol (14) und dem Energiespeicher (168) parallel zum Schalter (162) und zur Oszillator- und Transformatorschaltung (166) angeordnet, die im folgenden auch kurz Schwingschaltung genannt wird. Bei tiefen Außentemperaturen schließt die Steuerung (160) den Schalter (162) kurzzeitig, wodurch die Schwingschaltung am Ausgang in den Energiespeicher (168) eine Spannung einspeist, die über der Batteriespannung liegt. Der Energiespeicher (168) ist zwischen dem Ausgang der Schwingschaltung und dem Pol (22) angeordnet.

Die Ausgangsspannung der Schwingschaltung ist so hoch gewählt, daß sie als Ladespannung für die Batterie geeignet ist. Nach dem Aufladen des Energiespeichers (166) öffnet die Steuerung (160) den Schalter (162) und schließt den Schalter (164). Hierdurch gibt der Energiespeicher (168) einen Ladestrom an die Batterie ab. Die Batterie wird also "rückgeladen". Die Steuerung (160) enthält einen Multivibrator, der die Steuerspannungen für die Schalter (162), (164) erzeugt. Neben dieser "Rückladung" bewirkt der Ladestrom in der Batterie eine gewisse Wärmeentwicklung, wobei beide Wirkungen das Startvermögen bei tiefen Außentemperaturen verbessern.

Besonders bei Traktionsbatterien kann auf das Heizen ganz verzichtet werden, um auch im Bereich normaler Temperaturen größere Reichweiten zu erzielen. Hier empfiehlt es sich, die Batterien zyklisch "rückzuladen". Frequenz, Lade-, Rückladestromstärke und Rückladespannung sind entsprechend auf den Batterietyp abzustimmen.

Gerade moderne Batteriekonzepte wie Aluminium-Luft-Batterien usw. können hierdurch wirtschaftlich sinnvoll werden (z. B. Reduzierung überhöhter Gasung).

Als Speichermedium können je nach Batteriegröße und Typ Kondensatoren großer Kapazität (Goldcaps) oder Nicad- und Litium-Accumulatoren eingesetzt werden.

Die Fig. 5 zeigt eine Anordnung, bei der die Brückenschaltung die Temperaturregelschaltung (34), der Thermistor als Temperaturfühler in der Batterie, die Schwellwertüberwachungsschaltung (148) und die Torschaltung (146) in gleicher Weise vorhanden sind wie bei der in Fig. 4 dargetellten Anordnung.

Auch die Steuerung (160) ist in gleicher Weise wie bei der Anordnung gemäß Fig. 4 vorhanden. Von der Steuerung (160) wird bei der in Fig. 5 dargestellten Anordnung nur ein Ausgangssignal verwendet, das ein Relais (170) speist. Das Relais (170) hat einen Umschaltkontakt (172) und wenigstens einen Ruhestromkontakt (174). Ein erster Energiespeicher (176) ist zwischen dem Pol (14) und einem Eingang des Umschaltkontaktes (172) angeordnet, dessen Ausgang einerseits an einen zweiten Energiespeicher (178) und an den Ruhestromkontakt (174) angeschlossen ist. Ein zweiter Eingang des Umschaltkontaktes (172) ist an den Pol (14) der Batterie angeschlossen. Der Ruhestromkontakt (174) und der Energiespeicher (178) sind weiterhin mit dem Pol (22) der Batterie verbunden.

Wenn der Temperaturfühler und die Schwellwertüberwachungsschaltung (148) festgestellt haben, daß infolge tiefer Außentemperaturen die Kaltstarteigenschaften der Batterie verbessert werden sollen, dann wird die Steuerung (160) aktiviert.

Im Normalfall lädt die Batterie die beiden Energiespeicher (176), (172) auf die Batteriespannung auf. Bei den Energiespeichern handelt es sich um Bauelemente, die oben in Verbindung mit der Anordnung gemäß Fig. 4 bereits erläutert wurden. Nach einer gewissen Aufladezeitspanne betätigt die Steuerung (160) das Relais (170), wodurch die beiden Energiespeicher (176), (178) in Reihe zwischen die Pole (14), (22) geschaltet werden.

Durch die Reihenschaltung wird der Batterie eine erhöhte Spannung zugeführt, die einen Ladestrom durch die Batterie treibt. Die Batterie wird hierdurch "rückgeladen" und um ein gewisses Maß erwärmt. Die Frequenz der Umschaltung und die Dauer der Aufladung und Entladung der Energiespeicher (176), (178) wird auf die Art und den Batterietyp abgestimmt. Es werden mindestens zwei Energiespeicher mit Hilfe einer entsprechenden Schaltung nacheinander oder parallel geladen, um dann in Reihe geschaltet mit entsprechend addierten Spannungen die Rückladung der Batterie zu ermöglichen.

Bei größeren Batteriepacks (Solarspeicher) können die Batterien untereinander entsprechend derart geschaltet werden, daß wechselndes Ent- und Rückladen ermöglicht wird.

Insbesondere in Verbindung mit den in Fig. 3 und 4 beschriebenen Anordnungen empfiehlt es sich die Batterien oder Batteriepacks durch eine entsprechende Vakuumisolierung vor niedrigen Temperaturen zu schützen. Für kleinere Zusammenstellungen von Batterien, d. h. kleinere Batteriepacks, ist eine einfache Vakuumzeltkonstruktion von Vorteil.

Unter eine größere, stabile, gasdichte, vorzugsweise kuppelförmige Wand wird eine kleinere halbkugelförmige "Ballonhülle" durch den Unterdruck soweit unter die Außenkonstruktion gesaugt, daß ein relativ schwaches Vakuum schon gute Isolierwerte ergibt.

Durch transparente Materialien kann das Außenlicht für die Erwärmung mitgenutzt werden. In den meisten Anwendungen wird die Eigenaufheizung der Batterien aufgrund der zyklischen Rückentladung für genügend hohe Temperaturen ausreichen.

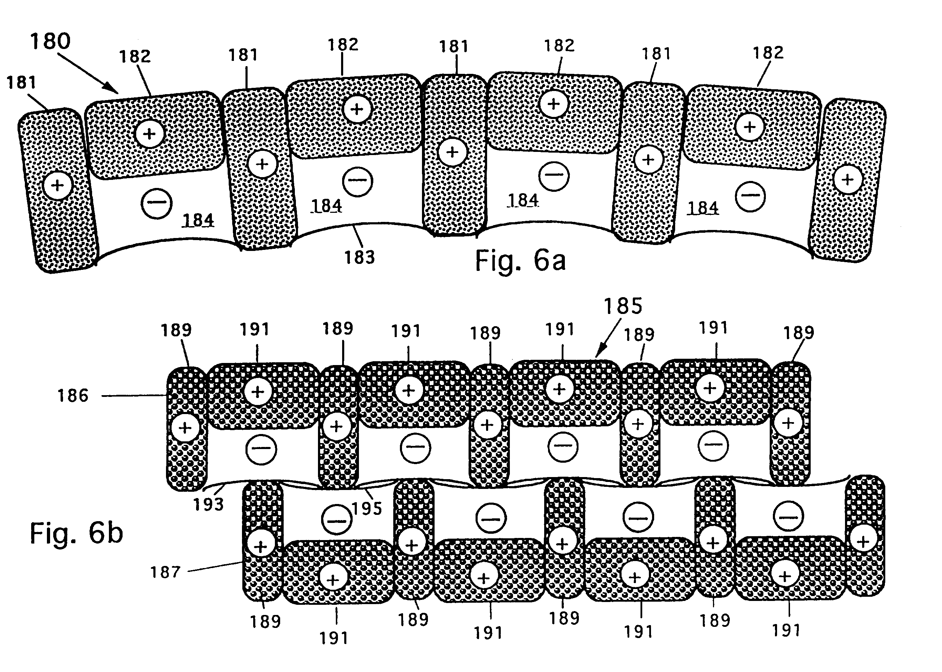

Die Fig. 6a zeigt eine Vakuum-, Überdruckkammerkonstruktion, bei der eine Kombination aus Vakuum- und Überdruckkammern eine stabile Wand erzeugen. Hierdurch kann weitestgehend bei der Dachkonstruktion auf schwere und wärmeleitende Stützelemente für das Tragwerk verzichtet werden.

Eine Wand (180), die z.B. tonnenförmig über eine Reihe von Batterien gewölbt sein kann, enthält erste Wandsegmente (181), die kammerartig ausgebildet, innen hohl und im Abstand voneinander angeordnet sind. Die Wandsegmente (181) haben in etwa einen rechteckförmigen Querschnitt. Vorzugsweise ist ein leicht trapezförmiger Querschnitt vorhanden, wenn eine tonnenförmige Wölbung geschaffen werden soll. Zwischen jeweils zwei Wandsegmenten (181), die sich über die gesamte Wandstärke erstrecken, sind zweite Wandsegmente (182) angeordnet, die kammerartig ausgebildet und innen hohl sind. Die zweiten Wandsegmente (182) beginnen ebenso wie die ersten Wandsegmente auf der Außenseite der Wand (180), erstrecken sich aber nicht über die gesamte Wandstärke, sondern nur über einen Teil, wobei der restliche Teil des Zwischenraums zwischen je zwei Wandsegmenten (181) frei bleibt.

Bei der in Fig. 6a dargestellten Ausführungsform füllen die zweiten Wandsegmente jeweils die Hälfte der Zwischenräume aus. Die zweiten Wandsegmente (182) haben ebenfalls in etwa rechteckige oder leicht trapezförmige Querschnitte und sind bausteinartig an die Wandform angepaßt. Die Hohlräume der Wandsegmente (181), (182) stehen unter Überdruck und sind miteinander verbunden. Hierdurch bilden sie eine stabile Tragkonstruktion. Eine gasdichte Wand (183) ist zwischen den wandinnenseitigen Enden der ersten Wandabschnitte (181) angeordnet und bildet mit den Wänden der Wandsegmente (181), (182) Unterdruckkammern (184). Die Über- und Unterdruckkammern der Wand (180) sind in Fig. 6a durch Plus- und Minuszeichen charakterisiert. Die Wandsegmente (181), (182) können durch Öffnungen miteinander verbunden sein, wodurch einerseits eine gleichzeitige Befüllung mit Druckgas und andererseits ein gleichmäßiger Druck erreicht wird. Auch die Unterdruckkammern (184) können ebenfalls durch Öffnungen miteinander verbunden sein, so daß auch in diesen Kammern durch gleichzeitiges Evakuieren ein gleichmäßiger Unterdruck bzw. Vakuum herrschen kann.

Die Fig. 6b zeigt eine Wandkonstruktion (185), die zwei gleich ausgebildete Hälften, nämlich eine äußere Hälfte (186) und eine innere Hälfte (187) aufweist. Jede Hälfte (186), (187) enthält erste Wandsegmente (189), die im Abstand voneinander angeordnet und innen hohl sind, ungefähr rechteckige oder trapezförmige Querschnitte haben und unter Überdruck stehen. Zwischen den ersten Wandsegmenten (189) befinden sich jeweils zweite Wandsegmente (191), die ebenfalls innen hohl sind, ungefähr rechteckige oder trapezförmige Querschnitte haben und unter Überdruck stehen. Die Wandsegmente (191) beginnen wie die Wandsegmente (191) an der Wandaußenseite und verlaufen nicht wie die ersten Wandsegmente (189) über die halbe Wandstärke, sondern nur über einen Teil der Wand. Eine gasdichte Folie (193) ist gegen die in der Wandmitte liegenden Enden der ersten Wandsegmente (189) angelehnt. Die nicht von den zweiten Wandsegmenten (191) ausgefüllten Zwischenräume zwischen den ersten Wandsegmenten (189) stehen unter Unterdruck, wodurch die Folie (193) gegen die Wandsegmente (189) gedrückt wird. In gleicher Weise wird eine gasdichte Folie (195) gegen die ersten Wandsegmente der inneren Hälfte (187) gedrückt, die gleichartig wie die äußere Hälfte (187) ausgebildet ist.

Die Wandsegmente (189), (191) der beiden Hälften (186), (187) sind um den halben Abstand zweier Wandsegmente (189) versetzt zueinander angeordnet. Deshalb liegen die in der Wandmitte angeordneten Enden der Wandsegmente (189) jeweils an der Folie der gegenüberliegenden Hälfte an. Die Wandsegmente (189), (191) sind fest miteinander verbunden. Durch die Versetzung der beiden Hälften (186), (187) grenzen die unter Unterdruck stehenden Räume der beiden Hälften (186), (187) aneinander. Die Wandsegmente (189) der beiden Hälften (186), (187) sind lediglich durch die schlechte wärmeleitenden Folien (193), (195) miteinander verbunden.

Die in Fig. 6a dargestellte Wandkonstruktion hat daher ein besonders gutes Wärmeisoliervermögen.

Die Wandsegmente (189), (191) je in einer Hälfte können durch nicht dargestellte Öffnungen miteinander verbunden sein, so daß in allen Kammern zugleich der gleiche Überdruck erzeugt werden kann. Hinsichtlich des Unterdrucks bzw. Vakuums gilt dies auch für die Unterdruckkammern, die von den Wandsegmenten (189), (191) und den Folien (193) bzw. (195) eingeschlossen werden.

In Fig. 6b sind in den Überdruckkammern Pluszeichen zur Andeutung des Überdrucks und in den Unterdruckkammern Minuszeichen zur Andeutung des Unterdrucks eingetragen. Die Vorrichtung gemäß Fig. 6b eignet sich als Dachkonstruktion für eine zahlreiche Batterien enthaltende Anlage, wobei die Wandsegmente bausteinartig an die Gewölbeform angepaßt sind. Die Wandmaterialien der Wandabschnitte (191), (189) und der Folien (193), (195) können lichtdurchlässig sein.

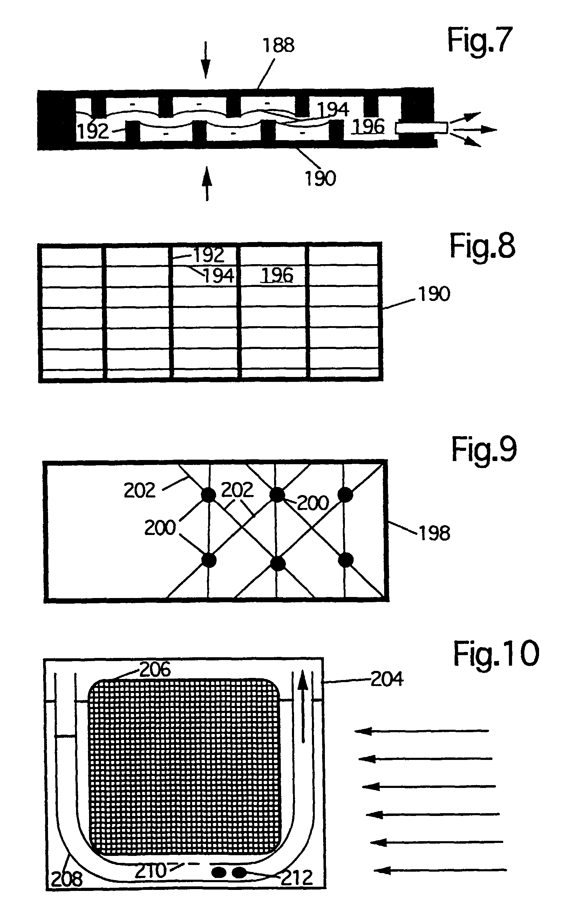

Die Fig. 7 und 8 zeigen Wände für Batterien, die jeweils zwei Platten (180), (190) aufweisen, von deren Innenseiten Noppen bzw. Wülste (192) in regelmäßigen Abständen vorspringen. Die Wülste (192) der beiden Platten (188), (190) sind gegeneinander versetzt. Über die Wülste (192) ist ein Netzwerk von gestrafften, möglichst unelastischen Schnüren bzw. Seilen (194) gespannt, die eine geringe Wärmeleitfähigkeit haben. Im Hohlraum (196) zwischen den Platten (188), (190) wird Unterdruck bzw. Vakuum erzeugt, wodurch sich die Wülste (192) gegen die Seile (194) legen, die die vom Luftdruck auf die Platten (188), (190) ausgeübte Kraft aufnehmen, d. h. die Seile (192) aus Kunststoff halten die beiden Platten (188), (190) voneinander fern. Die in Fig. 7 und 8 dargestellte Vorrichtung wirkt demnach in Bezug auf die Seile (194) nach Art einer Hängebrückenkonstruktion.

Die Fig. 9 zeigt eine Platte (198) einer zwei derartige Platten enthaltenden Behälterwand, die anstelle von Wülsten (192) Noppen (200) aufweist, die in gleichmäßigen Abständen voneinander von der Platteninnenseite vorspringen. Über die Noppen (200) sind unelastische, wärmeisolierende Seile (202) gespannt. Anstelle der Seile (194), (202) kann auch eine Folie verwendet werden.

Die Abgabe des von Startern oder anderen Verbrauchern benötigten hohen Stroms bei tiefen Außentemperaturen wird durch eine gleichmäßige Elektrolytdurchmischung verbessert, die auch im Betrieb bei höheren Temperaturen von Vorteil ist.

Eine Vorrichtung zur Erzielung einer gleichmäßigen Elektrolytdurchmischung ist im Querschnitt in Fig. 10 in Verbindung mit einer Zelle (204) einer Batterie dargestellt, die plattenförmige Elektroden (206) enthält. Im Raum zwischen den Wänden der Zelle (204) und den Elektroden (206) ist ein U-Rohr (208) angeordnet, dessen Krümmung nahe am Boden der Zelle (204) liegt und Durchlaßöffnungen (210) für Flüssigkeit in Form von Perforationen hat. Die Öffnungen des Rohrs (208) befinden sich nahe am oberen Ende der Zelle (204). Im Inneren des Rohrs (208) befinden sich Kugeln (212), insbesondere aus Blei. Die säurefesten, z. B. mit einem Kunststoff (Teflon) umhüllten Kugeln (212) sind im Rohr (210) beweglich gelagert.

Statt der Kugeln (212) kann auch ein bündig mit dem Rohr (210) abschließender Bleischlitten vorgesehen sein. Das U-Rohr (208) ist an die Außenwand der Zelle (204) angepaßt oder in die Wand integriert. Durch die Öffnungen (210) kann Flüssigkeit vom Boden der Zelle (204) her eindringen. Im Bodenbereich kann die Flüssigkeitskonzentration, insbesondere bei tiefen Temperaturen, höher als im übrigen Teil der Zelle (204). Bei Beschleunigungen des Fahrzeuges bewegen sich die Kugeln (212) und rufen im Rohr (208) Störungen von unten nach oben hervor.

Bei jeder Beschleunigung des Fahrzeugs längsseitig des U-Rohres (208) wird so die konzentrierte Säure von oben in die Batterie gepumpt. Die oberen Ausgänge des U-Rohres können bei Bedarf mit einem Ventil versehen werden (Flatter oder Kugel).

Bei stationär eingesetzten Batterien sind in den Zellen die gleichen U-Rohre angeordnet. Im unteren Bereich sind die U-Rohre jeweils von Spulen umgeben, die zeitlich nacheinander an Betriebsspannung gelegt werden und magnetische Felder erzeugen. Das Anlegen der Spannung an die Spulen wird im gleichen Zyklus gesteuert wie oben die Heiztransistoren. Durch die magnetischen Felder werden säurefest gekapselte Eisenkugeln im jeweiligen Rohr in Bewegung versetzt, wodurch sich eine Strömung ausbildet, die eine Durchmischung des Elektrolyten begünstigt. Die Spulen müssen, wenn sie im Zelleninneren angeordnet sind, säurefest eingeschlossen sein. Die Spulen können aber auch außerhalb der Zellen angeordnet sein, wofür kein säurefester Einschluß notwendig ist.

Wenn größere Batterieanlagen in den oben beschriebenen Gehäusen angeordnet sind, ist es zweckmäßig eine Belüftungseinrichtung vorzusehen, die bei höheren Außentemperaturen in Betrieb genommen wird. Es ist auch eine Kühleinrichtung möglich, die nach dem Verdunsterprinzip arbeiten kann.

## Patentansprüche

1. Anordnung zur Verbesserung der Stromabgabe einer aufladbaren Batterie bei tiefen Außentemperaturen für einen Verbraucher, wobei ein Temperaturfühler, der flüssigkeitsdicht und säurefest im Inneren der Batterie angeordnet ist, einen Stromfluß durch wenigstens ein Heizelement freigibt, wenn die Batterietemperatur unterhalb eines vorgegebenen Temperatursollwertes liegt und die Batteriespannung größer als ein unterer Schwellenwert und kleiner als ein oberer Schwellenwert der Spannung ist,
**dadurch gekennzeichnet,**
daß eine Triggerschaltung vorgesehen ist, die auf den Anstieg der Batteriespannung nach dem Abschalten des Stromes in einem, einen hohen Stromverbrauch aufweisenden Verbraucher anspricht und eine Zeitschaltung (100) betätigt, die bei unterhalb des unteren Schwellenwertes liegender oder diesem gleicher Batteriespannung das Heizelement (10, 158) für eine eingestellte Zeitdauer leitend steuert.

2. Anordnung nach Anspruch 1,
**dadurch gekennzeichnet,**
daß das Heizelement eine flüssigkeitsdicht und säurefest in der Batterie angeordnete Heizfolie (158) ist, die elektrisch leitfähiges Material enthält, das sich beim Stromdurchgang aufheizt.

3. Anordnung nach Anspruch 1,
**dadurch gekennzeichnet,**
daß das Heizelement ein auf einem Kühlkörper befestigter, flüssigkeitsdicht und säurefest im Inneren der Batterie angeordneter Leistungstransistor (10) ist, dessen Steuerelektrode von einer Temperaturregelschaltung (34) ansteuerbar ist.

4. Anordnung, insbesondere nach Anspruch 1, 2 oder 3,
**dadurch gekennzeichnet,**
daß das Heizelement oszillierend ein- und ausgeschaltet wird und daß die Schwingungen des Stromes an die Größe und den Typ der Batterie angepaßt sind.

5. Batterieheizvorrichtung nach einem oder mehreren der Ansprüche 1 oder 2 bis 4,
**dadurch gekennzeichnet,**
daß die Zeitdauer etwa 15 Minuten beträgt.

6. Batterieheizvorrichtung nach einem der vorhergehenden Ansprüche 1 oder 2 bis 5,
**dadurch gekennzeichnet,**
daß die Zeitschaltung (100) während der Zeitdauer ein Anzeigeelement betätigt.

7. Batterieheizvorrichtung nach einem oder mehreren der Ansprüche 1 oder 2 bis 6,
**dadurch gekennzeichnet,**
daß der Leistungstransistor (10) mit seiner Steuerelektrode über zwei in Reihe geschaltete Widerstände (30, 32) mit der Temperaturregelschaltung (34) und über weitere zwei in Reihe geschaltete Widerstände (24, 26) mit einem der Zeitschaltung (100) nachgeschalteten Differenzverstärker (28) verbunden ist, daß Einrichtungen (38, 42) zur Überwachung des unteren und oberen Schwellenwerts über Dioden (40, 44) an die gemeinsame Verbindungsstelle der beiden von der Temperaturregelschaltung gespeisten Widerstände (30, 32) gelegt sind und daß die Temperaturregelschaltung über eine Diode (36) an die gemeinsame Verbindungsstelle der vom Differenzverstärker (28) gespeisten Widerstände (24, 26) gelegt ist.

8. Batterieheizvorrichtung nach einem oder mehreren der Ansprüche 1 oder 2 bis 7,
**dadurch gekennzeichnet,**
daß eine Triggerschaltung vorgesehen ist, die auf den Abfall der Batteriespannung beim Einschalten des Stroms für einen Verbraucher mit hohem Stromverbrauch anspricht und die Zeitschaltung (100) zurücksetzt.

9. Batterieheizvorrichtung nach einem oder mehreren der Ansprüche 1 oder 2 bis 8,
**dadurch gekennzeichnet,**
daß ein Meßwiderstand (20) in Reihe mit dem Leistungstransistor (10) angeordnet und Bestandteil eines Schwellenwertdiskriminators ist, dessen Ausgang über Dioden (128, 130) je an die gemeinsamen Verbindungsstellen der in Reihe geschalteten Widerstände (24, 26, 30, 32) angeschlossen ist.

10. Batterieheizvorrichtung nach einem oder mehreren der Ansprüche 1 oder 2 bis 9,
**dadurch gekennzeichnet,**
daß erste Leitungen (12, 19), die zum Heizelement oder dem Temperaturfühler verlaufen, an den oberen Rändern einer Wand (136) Anschlüsse (144) aus Blei aufweisen, daß im Deckel (138) der Batterie (16) die Bauteile der Temperaturregelschaltung (34), der Einrichtungen (38, 42) zur Überwachung der Schwellenwerte, der Triggerschaltungen und der Zeitschaltung (100) flüssigkeitsdicht und säurefest angeordnet sind und daß die zu dem Temperaturfühler und dem Heizelement verlaufenden zweiten Leitungen unterhalb des Deckels (138) bis zu den die Schmalseiten der Wände überdeckenden Bereichen geführt und mindestens an den Enden mit Anschlüssen (142) aus Blei versehen sind, die mit den Anschlüssen (144) der ersten Leitungen (12) verschweißt sind.

11. Anordnung, insbesondere nach einem oder mehreren der vorhergehenden Ansprüche,
**dadurch gekennzeichnet,**
daß ein Behälter für mehrere Batterien Wände aufweist, von denen wenigstens eine (180) erste Wandsegmente (181) im Abstand voneinander enthält, die hohl sind und unter Überdruck stehen und sich über die volle Wandstärke erstrecken, daß jeweils ein an einer Wandaußenseite beginnender Teil der Zwischenräume zwischen den ersten Wandsegmenten (181) von unter Überdruck stehenden, hohlen, zweiten Wandsegmenten (182) ausgefüllt ist, die mit den ersten Wandsegmenten (181) verbunden sind, und daß jeweils ein anderer Teil der Zwischenräume zwischen den ersten Wandsegmenten (181) von einer die ersten Wandsegmente (181) an ihren wandinnenseitigen Enden überbrückenden Wand (183) abgeschlossen ist und unter Unterdruck steht.

12. Anordnung, insbesondere nach einem oder mehreren der vorhergehenden Ansprüche,
**dadurch gekennzeichnet,**
daß ein Behälter für mehrere Batterien Wände aufweist, von denen wenigstens eine (185) zwei gleich ausgebildete, jeweils innen und außen angeordnete Hälften (186, 187) enthält, die jeweils im Abstand voneinander angeordnete, hohle, unter Überdruck stehende erste Wandsegmente (189) aufweisen, daß jeweils die von einer Wandaußenseite beginnenden Zwischenräume zwischen den ersten Wandsegmenten (189) teilweise von weiteren, hohlen, unter Überdruck stehenden zweiten Wandsegmenten (191) ausgefüllt sind, die mit den ersten Wandsegmenten (189) verbunden sind, daß an die den Wandaußenseiten abgewandten Seiten der ersten Wandsegmente (189) Folien unter dem in den wandsegmentfreien Zwischenräumen herrschenden Unterdruck angedrückt sind, und daß die ersten Wandsegmente (189) der beiden Hälften um die Hälfte des Abstands der Wandsegmente (189) versetzt zueinander angeordnet sind.

13. Anordnung, insbesondere nach einem oder mehreren der Ansprüche 1 bis 10,
**dadurch gekennzeichnet,**
daß wenigstens eine Batterie in einem Behälter angeordnet ist, die eine Wand aus zwei Platten (188, 190) aufweist, die auf den Innenseiten Wülste (192) enthalten, die auf den beiden Platten versetzt zueinander angeordnet sind und über die unelastische Seile (194) mit geringer Wärmeleitfähigkeit gespannt sind, und daß die Wülste (192) unter einem im Hohlraum (196) zwischen den Platten (188, 190) herrschenden Unterdruck oder Vakuum gegen die Seile (194) angedrückt sind.

14. Anordnung, insbesondere nach einem oder mehreren der vorhergehenden Ansprüche,
**dadurch gekennzeichnet,**
daß in jeder Zelle (204) einer Batterie ein U-förmiges Rohr (208) angeordnet ist, dessen Bogen nahe am Zellenboden liegt und Durchlaßöffnungen (210) für Flüssigkeiten aufweist, daß die Öffnungen der Schenkel des Rohres nahe am oberen Ende der Zelle (204) angeordnet sind, und daß Mittel zur Erzeugung einer Strömung im oder am Rohr (208) vorgesehen sind.

15. Anordnung nach Anspruch 14,
**dadurch gekennzeichnet,**
daß die Mittel zur Erzeugung der Strömung Kugeln (212) sind, die im Rohr (208) beweglich angeordnet sind.

16. Anordnung nach Anspruch 14 oder 15,
**dadurch gekennzeichnet,**
daß die Mittel zur Erzeugung der Strömung Spulen sind, die den unteren Teil des Rohres umgeben und abwechselnd nacheinander an Betriebsspannung anlegbar sind und daß im Rohr säurefest gekapselte Eisenkugeln angeordnet sind.

## Claims

1. A device for improving the current output of a chargeable battery at low outside temperatures for a consumer, wherein a temperature sensor which is disposed fluid-proof and acid-proof in the interior of the battery releases a current flow for at least one heating element if the battery temperature falls below a predetermined set temperature value and the battery voltage is greater than a lower threshold value and less than an upper threshold value,
**characterized in that**
a trigger circuit is provided which reacts to the rise in battery voltage after the current in a consumer with high current consumption has been turned off and actuates a timing circuit (100) which controls the heating element (10, 158) so it is conducting for a set period of time if the battery voltage lies below the lower threshold value or is equal to it.

2. A device in accordance with Claim 1,
**characterized in that**
the heating element is a heating foil (158) which is disposed fluid-proof and acid-proof in the battery and contains material which is capable of electrically conducting and heats up when current flows through it.

3. A device in accordance with Claim 1,
**characterized in that**
the heating element is a power transistor (10), disposed fluid-proof and acid-proof on a cooling element in the interior of the battery, the control electrode of which can be triggered by a temperature control circuit (34).

4. A device, particularly in accordance with Claims 1, 2 or 3,
**characterized in that**
the heating element is oscillatingly switched on and off, and that the oscillations of the current are adapted to the size and type of the battery.

5. A battery heating device in accordance with one or several of Claims 1 or 2 to 4,
**characterized in that**
the length of time is approximately 15 minutes.

6. A battery heating device in accordance with one or several of Claims 1 or 2 to 5,
**characterized in that**
the timing circuit (100) operates an indicator element during the length of time.

7. A battery heating device in accordance with one or several of Claims 1 or 2 to 6,
**characterized in that**
the control electrode of the power transistor (10) is connected with the temperature control circuit (34) via two series-connected resistors (30, 32) and with a differential amplifier (28) connected downstream of the timing circuit (100) via two further series-connected resistors (24, 26), that devices (38, 42) for monitoring the lower and upper threshold values are connected via diodes (40, 44) to the common connection point of the two resistors (30, 32) supplied by the temperature control circuit, and that the temperature control circuit is connected via a diode (36) to the common connection point of the resistors (24, 26) supplied by the differential amplifier (28).

8. A battery heating device in accordance with one or several of Claims 1 or 2 to 7,
**characterized in that**
a trigger circuit is provided, which reacts to the drop of the battery voltage when a consumer with high current consumption is switched on and sets the timing device (100) back.

9. A battery heating device in accordance with one or several of Claims 1 or 2 to 8,
**characterized in that**
a measuring resistor (20) is disposed in series with the power transistor (10) and is a component of a threshold value discriminator, the output of which is connected via diodes (128, 130) respectively to the common connection points of the series-connected resistors (24, 26, 30, 32).

10. A battery heating device in accordance with one or several of Claims 1 or 2 to 9,
**characterized in that**
first lines (12, 19) which extend to the heating element or the temperature sensor have connections (144) of lead at the upper edges of a wall (136), that the components of the temperature control circuit (34), the devices (38, 42) for monitoring the threshold value, the trigger circuits and the timing circuit (100) are disposed fluid-proof and acid-proof in the lid (138) of the battery (16), and that the second lines extending to the temperature sensor and the heating element are passed underneath the lid (138) to the areas which cover the narrow sides of the walls and are provided with connectors (142) of lead at least at the ends, which are welded together with the connectors (144) of the first lines (12).

11. A device, in particular in accordance with one or several of the preceding Claims,
**characterized in that**
a container for several batteries has walls, at least one (180) of which contains first wall segments (181) spaced apart from each other, which are hollow and subjected to overpressure and extend over the entire thickness of the wall, that respectively one portion of the spaces starting at a wall exterior between the first wall segments (181) is filled with hollow second wall segments (182) subjected to overpressure, which are connected with the first wall segments (181), and that a different part of the spaces between the first wall segments (181) is closed off by a wall (183) which bridges the first wall segments (181) on their ends at the inside of the wall and is subjected to underpressure.

12. A device, in particular in accordance with one or several of the preceding Claims,
**characterized in that**
a container for several batteries has walls, at least one (185) of which contains two identically designed halves (186, 187) disposed respectively on the inside and the outside, which have hollow first wall segments (189) which are subjected to overpressure and are disposed respectively spaced apart, that the spaces between the first wall segments (189) respectively starting at an outside of the wall are partially filled with further hollow second wall segments (191) which are subjected to overpressure and are connected with the first wall segments (189), and that foils are pressed against the sides of the first wall segments (189) which are facing away from the outsides of the wall by the underpressure in the spaces which are free of wall segments and that the first wall segments (189) of the two halves are disposed offset from each other by half the distance of the wall segments (189).

13. A device, in particular in accordance with one or several of Claims 1 to 10,
**characterized in that**
at least one battery is disposed in a housing having a wall with two plates (188, 190) having beads (192) on the inside, which are disposed offset from each other on both plates and over which inelastic cables (194) of low thermal conductivity have been streched, and that the beads (192) are pressed against the cables (194) by means of an underpressure or vacuum obtaining in the hollow space (196) between the plates (188, 190).

14. A device, in particular in accordance with one or several of the preceding Claims,
**characterized in that**
a U-shaped pipe (208) is disposed in each cell (204) of a battery, the bend of which is located near the bottom of the cell and has flow-through openings (210), that the openings of the legs of the pipe are located close to the upper end of the cell (204), and that means for generating a flow in or on the pipe (208) are provided.

15. A device in accordance with Claim 14,
**characterized in that**
the means for generating the flow are spheres (212), which are movably disposed in the pipe (208).

16. A device in accordance with Claim 14 or 15,
**characterized in that**
the means for generating the flow are coils enclosing the lower part of the pipe and which can be alternatingly and sequentially connected to the operating voltage, and that acid-proof encapsulated iron spheres are disposed in the pipe.

## Revendications

1. Dispositif pour accroître la quantité de courant délivrée par une batterie rechargeable lorsque la température extérieure est basse pour un utilisateur, tandis qu'une sonde de température, qui est disposée à l'intérieur de la batterie de manière étanche aux liquides et résistant aux acides, délivre un écoulement de courant à travers au moins un élément chauffant lorsque la température de la batterie est située en dessous d'une température de consigne prédéterminée et que la tension de batterie est supérieure à une valeur inférieure de seuil de la tension et est inférieure à une valeur supérieure de seuil de la tension,
caractérisé en ce que,
il est prévu un circuit de gâchette qui réagit à l'augmentation de la tension de batterie après le débranchement du courant dans un utilisateur présentant une forte consommation en courant, et qui active un circuit de temporisation (100) qui place l'élément chauffant (10, 158) à l'état conducteur pendant une durée réglée lorsque la tension de batterie est située en dessous de la valeur inférieure de seuil ou est égale à celle-ci.

2. Dispositif selon la revendication 1, caractérisé en ce que l'élément chauffant est une feuille chauffante (158) disposée dans la batterie de manière étanche aux liquides et résistant aux acides, et qui contient un matériau électriquement conducteur qui se réchauffe lors du passage du courant.

3. Dispositif selon la revendication 1, caractérisé en ce que l'élément chauffant est un transistor de puissance (10) disposé à l'intérieur de la batterie de manière étanche aux liquides et résistant aux acides, fixé sur un refroidisseur, et dont l'électrode de commande peut être commandée par un circuit de régulation de température (34).

4. Dispositif en particulier selon la revendication 1, 2 ou 3, caractérisé en ce que l'élément chauffant est branché et débranché de manière oscillante, et en ce que les oscillations du courant sont adaptées à la grandeur et au type de la batterie.

5. Dispositif de chauffage de batterie selon l'une ou plusieurs des revendications 1 ou 2 à 4, caractérisé en ce que la durée est d'environ 15 minutes.

6. Dispositif de chauffage de batterie selon l'une des revendications précédentes 1 ou 2 à 5, caractérisé en ce que le circuit de temporisation (100) actionne un élément d'affichage pendant la durée.

7. Dispositif de chauffage de batterie selon l'une ou plusieurs des revendications 1 ou 2 à 6, caractérisé en ce que le transistor de puissance (10) est relié par son électrode de commande à un circuit de régulation de température (34), par l'intermédiaire de deux résistances (30, 32) branchées en série, et à un amplificateur différentiel (28) branché en amont du circuit de temporisation (100), par l'intermédiaire de deux résistances (24, 26) branchées en série, en ce que des dispositifs (38, 42) pour la surveillance de la valeur inférieure et de la valeur supérieure de seuil sont branchés par l'intermédiaire de diodes (40, 44) sur le point de liaison commun des deux résistances (30, 32) alimentées par le circuit de régulation de température, et en ce que le circuit de régulation de température est branché par l'intermédiaire d'une diode (36) sur le point de liaison commun des résistances (24, 26) alimentées par l'amplificateur différentiel (28).

8. Dispositif de chauffage de batterie selon l'une ou plusieurs des revendications 1 ou 2 à 7, caractérisé en ce qu'il est prévu un circuit de gâchette qui répond à la diminution de la tension de batterie lors du branchement du courant pour un utilisateur à haute consommation de courant, et qui remet à zéro le circuit de temporisation (100).

9. Dispositif de chauffage de batterie selon l'une ou plusieurs des revendications 1 ou 2 à 8, caractérisé en ce qu'une résistance de mesure (20) est disposée en série sur le transistor de puissance (10), et fait partie d'un discriminateur de valeur de seuil dont la sortie est raccordée, chaque fois par l'intermédiaire de diodes (128, 130), aux points de liaison communs des résistances (24, 26, 30, 32) branchées en série.

10. Circuit de chauffage de batterie selon l'une ou plusieurs des revendications 1 ou 2 à 9, caractérisé en ce que des premiers conducteurs (12, 19), qui conduisent vers l'élément chauffant ou vers la sonde de température, présentent sur les bords supérieurs d'une paroi (136) des raccordements en plomb (144), en ce que dans le couvercle (138) de la batterie (16), les composants du circuit de régulation de température (34), des dispositifs (38, 42) pour la surveillance des valeurs de seuil, des circuits de gâchette et du circuit de temporisation (100) sont disposés de manière étanche aux liquides et résistant aux acides, et en ce que les seconds conducteurs qui conduisent à la sonde de température et à l'élément chauffant passent en dessous du couvercle (138), jusqu'aux régions recouvrant les côtés étroits des parois, et, au moins aux extrémités, sont pourvus de raccordements (142) en plomb qui sont soudés aux raccordements (144) des premiers conducteurs (12).

11. Dispositif en particulier selon l'une ou plusieurs des revendications précédentes, caractérisé en ce qu'un récipient pour plusieurs batteries présente des parois parmi lesquelles au moins une paroi (180) contient à distance les uns des autres des premiers segments de paroi (181) qui sont creux et sont placés sous pression, et qui s'étendent sur toute l'épaisseur de la paroi, en ce que chaque fois une partie, commençant sur une face externe de paroi, des espaces intermédiaires situés entre les premiers segments de paroi (181) est remplie par de seconds segments de paroi (182) creux et placés sous pression, qui sont reliés aux premiers segments de paroi (181), et en ce que chaque autre partie des espaces intermédiaires située entre les premiers segments de paroi (181) est refermée par une paroi (183) reliant les premiers segments de paroi (181) par leurs extrémités situées à l'intérieur de la paroi, et est placée sous dépression.

12. Dispositif, en particulier selon l'une ou plusieurs des revendications précédentes, caractérisé en ce qu'un récipient pour plusieurs batteries présente des parois parmi lesquelles au moins une paroi (185) contient deux moitiés (186, 187) configurées identiquement et disposées l'une à l'intérieur et l'autre à l'extérieur, et qui présentent des premiers segments de paroi (189) tous disposés à distance les uns des autres, creux et placés sous surpression, en ce que les espaces intermédiaires, commençant chaque fois sur la face externe d'une paroi située entre les premiers segments de paroi (189), sont remplis partiellement par d'autres seconds segments de paroi (191), creux, placés sous surpression, qui sont reliés aux premiers segments de paroi (189), en ce que des feuilles sont repoussées sur les côtés des premiers segments de paroi (189) éloignés de la face externe des parois, sous l'action de la dépression régnant dans les espaces intermédiaires exempts de segments de paroi, et en ce que les premiers segments de paroi (189) des deux moitiés sont disposés décalés l'un par rapport à l'autre de la moitié de la distance entre les segments de paroi (189).

13. Agencement, en particulier selon l'une ou plusieurs des revendications 1 à 10, caractérisé en ce qu'au moins une batterie est disposée dans un récipient qui présente une paroi constituée de deux plaques (188, 190) qui contiennent sur le côté interne des bourrelets (192) qui sont disposés sur les deux plaques en position décalée l'un par rapport à l'autre et qui sont tendus par l'intermédiaire des câbles non élastiques (194) présentant une faible conductivité thermique, et en ce que les bourrelets (192) sont repoussés contre les câbles (194) sous l'action d'une dépression ou d'un vide régnant dans l'espace creux (196) situé entre les plaques (188, 190).

14. Agencement, en particulier selon l'une ou plusieurs des revendications précédentes, caractérisé en ce que dans chaque cellule (204) d'une batterie est disposé un tube (208) en forme de U dont l'arc est situé à proximité du fond de la cellule et présente des ouvertures de passage (210) pour des liquides, en ce que les ouvertures des branches du tube sont disposées à proximité de l'extrémité supérieure de la cellule (204), et en ce qu'il est prévu des moyens pour la création d'un écoulement dans ou sur le tube (208).

15. Agencement selon la revendication 14, caractérisé en ce que les moyens pour la création de l'écoulement sont des billes (212) qui sont disposées de manière à pouvoir se déplacer dans le tube (208).

16. Dispositif selon la revendication 14 ou 15, caractérisé en ce que les moyens pour la création de l'écoulement sont des bobines qui entourent la partie inférieure du tube et peuvent recevoir l'une après l'autre de manière alternée la tension de service, et en ce que des billes de fer encapsulées de manière à résister aux acides sont disposées dans le tube.
